# EUROPÄISCHE PATENTSCHRIFT

(11) **EP 1 338 455 B1**
(45) Veröffentlichungstag und Bekanntmachung des Hinweises auf die Patenterteilung: **05.07.2006**
(21) Anmeldenummer: 03003614.9
(22) Anmeldetag: 17.02.2003
(51) Int. Cl.: B60J 7/22

(54) **Windabweiseranordnung für ein öffnungsfähiges Fahrzeugdach**
Wind deflector arrangement for an openable vehicle roof
Déflecteur de vent pour toit ouvrant de véhicule

(30) Priorität: 20.02.2002 DE 10208185
(43) Veröffentlichungstag der Anmeldung: 27.08.2003
(73) Patentinhaber: Webasto AG, 82131 Stockdorf (DE)
(72) Erfinder: De Gaillard, Francois, 85390 Mouilleron en Pareds (FR)

(56) Entgegenhaltungen:
- EP-A- 0 381 263
- EP-A- 0 955 194
- EP-A- 1 080 963
- DE-A- 19 827 106
- DE-C- 19 713 360

## Beschreibung

Die Erfindung betrifft eine Windabweiseranordnung für ein Fahrzeugdach mit den Merkmalen des Oberbegriffs des Anspruchs 1, und ein Fahrzeugdach mit solch einer Windabweiseranordnung gemäß Anspruch 12.

Aus der DE 41 15 627 C1 ist eine Windabweiseranordnung für ein Fahrzeugdach mit einer Dachöffnung bekannt geworden, die von zumindest einem verschiebbaren Deckel zu öffnen und zu verschließen ist, der an seinem Hinterrand einen Windabweiser aufweist. Dieser Windabweiser ist am Deckel längsverschieblich derart gelagert, daß er bei geschlossenem Deckel in seiner Ruhestellung unterhalb des Deckels angeordnet ist und beim Öffnen des Deckels entgegen der Deckelverschieberichtung in eine Wirkstellung ausfährt. In seiner Ruhestellung unterhalb des Deckels ist der Windabweiser weder von außen noch von innen sichtbar.

Aus der EP 0 381 263 A1 ist ein gattungsgemäßes Schiebedach eines Fahrzeugs bekannt geworden, bei dem zum Verschließen und Freigeben einer Dachöffnung ein Deckel an beidseits der Dachöffnung vorgesehenen Längsführungen verschiebbar gelagert ist. Am hinteren Rand des Deckels ist ein Windabweiser angeordnet, der in einer abgesenkten Außerfunktionsstellung etwa horizontal angeordnet ist und mit dem Deckel nach hinten unter eine feste Dachfläche verlagerbar ist. Wenn der Deckel zum Freigeben der Dachöffnung nach vorne verlagert wird, ist der Windabweiser in einer nach oben geschwenkten Funktionsstellung und er folgt der Schiebebewegung des Deckes. Die Art der Lagerung des Windabweisers ist hier nicht offenbart.

Aus der EP 1 080 963 A2 ist ein mehrteiliges Schiebedach bekannt geworden, bei dem ein erster Dachabschnitt als Windabweiserlamelle gebildet ist, die ortsfest angeordnet ist und lediglich schräg ausgestellt werden kann. Der zweite und der dritte Dachabschnitt sind an seitlichen Längsführungen verschiebbar gelagert. Ein am hinteren Rand des zweiten oder des dritten Dachabschnitts angeordneter Windabweiser ist nicht offenbart.

Das in der DE 198 27 106 A1 offenbarte Schiebedach enthält einen Deckel zum Verschließen einer Dachöffnung. Ein am Vorderrand der Dachöffnung angeordneter Windabweiser ist mittels eines Gelenks an einem Dachrahmen schwenkbar gelagert und mittels einer Feder in Funktionsstellung vorgespannt. Ein mit dem Windabweiser verbundener Schwenkarm wird von einem mit dem Deckel verbundenen Niederhalter nach unten gedrückt und senkt den Windabweiser in seine Außerfunktionsstellung ab, wenn der Deckel nach vorne in seine Schließstellung bewegt wird. Eine am Hinterrand des Deckels angeordneter Windabweiser ist auch hier nicht offenbart.

Aufgabe der Erfindung ist es, eine eingangs genannte Windabweiseranordnung zu schaffen, deren Windabweiser zuverlässig gelagert und beim Öffnen der Schließeinrichtung in optimaler Weise positionierbar ist, sowie ein Fahrzeugdach mit einem derartigen Windabweiser bereitzustellen.

Diese Aufgabe wird bei einer eingangs genannten Windabweiseranordnung erfindungsgemäß dadurch gelöst, daß der Windabweiser beidseits am Fahrzeugdach an Führungen gelagert und von einem Antrieb bewegbar ist, daß er dem Hinterrand der sich in Fahrtrichtung öffnenden Schließeinrichtung folgt, wobei der Verlauf jeder Führung das Bewegungsverhalten des Windabweisers steuert.

Durch die Anordnung unter dem Dachteil, das z. B. von oder an einem Dachquerholm gebildet ist, wird der Hinterabschnitt der Schließeinrichtung, insbesondere ein Glasdeckel, im Schließzustand unterseitig nicht abgedeckt. Dadurch bleibt bei einem Glasdeckel die Durchsicht durch den Deckel unbehindert. Des weiteren wird in Schließstellung des Deckels kein Aufnahmeraum für den Windabweiser an der Unterseite des Deckels benötigt, so daß die Kopffreiheit in diesem Bereich verbessert ist.

Da der Windabweiser beidseits am Fahrzeugdach an Führungen gelagert ist, so daß der Windabweiser dem Hinterrand der sich in Fahrtrichtung öffnenden Schließeinrichtung folgen kann, kann der Windabweiser stets am Vorderrand der Dachöffnung positioniert werden, um eine optimale Luftleitwirkung über die Dachöffnung zu erzielen. Dies ist unabhängig von der jeweils eingestellten Größe der Dachöffnung, die durch die Verschiebestellung der Schließeinrichtung, insbesondere eines Schiebedachdeckels, festgelegt ist, möglich

Vorteilhafte Ausgestaltungen der Erfindung sind in den Unteransprüchen angegeben.

Der Antrieb des Windabweisers kann dadurch erfolgen, daß er mit der Schließeinrichtung gekoppelt ist und von dieser bewegt ist. Andererseits kann der Windabweiser auch einen eigenen Antrieb aufweisen, beispielsweise einen Elektromotor, der über Antriebskabel den Windabweiser beidseits verschieben kann.

Zweckmäßigerweise enthält der Windabweiser beidseits jeweils eine Lagereinrichtung, die den Windabweiser an der jeweiligen Führung am Fahrzeugdach bzw. an seitlichen Dachlängsholmen oder einem Dachrahmen am Ausschnitt für die Dachöffnung verschiebbar und verschwenkbar lagert.

Bevorzugt enthält die Lagereinrichtung einen Lagerarm, der an der Führung mittels eines Gleit-Schwenkteils gelagert ist. Der Lagerarm ist mit dem Windabweiser fest verbunden und steht in dessen Schließstellung je nach Auslegung gerade oder schräg nach unten ab.

Für die Bewegungssteuerung des Windabweisers ist bevorzugt, daß die Führung zumindest eine Führungskulisse mit einem das Bewegungsverhalten des Windabweisers steuernden Verlauf aufweist. Dann gibt die Führung bzw. die Führungskulisse den Bewegungsverlauf vor, während der Antrieb bzw. die Koppelung den Windabweiser verschiebt. Die Führung kann eine Führungskulisse mit einem abgesenkten Hinterabschnitt aufweisen, durch den der Windabweiser aus seiner ausgestellten Wirkstellung in seine in etwa horizontale oder auch leicht geneigte Ruhestellung unter den hinteren Dachabschnitt abgesenkt bzw. herabgeschwenkt wird.

Gemäß einer einfachen Gestaltung verbindet eine Koppelstange den Windabweiser mit der Schließeinrichtung. Die Koppelstange kann starr mit der Schließeinrichtung verbunden sein und an dem Windabweiser in einer Schwenkachse angelenkt sein oder sie ist auch an der Schließeinrichtung bewegbar gelagert.

Die Schließeinrichtung ist z. B. von einem Deckel eines Schiebedaches, von einem Lamellendach oder von einem Faltdach gebildet und insbesondere enthält sie zwei in Fahrtrichtung hintereinander angeordnete Deckel, die bevorzugt aus transparentem Material hergestellt sind und insbesondere Glasdeckel sind.

Wenn der Windabweiser einen eigenen Antrieb aufweist, so ist dieser zweckmäßigerweise von einer Steuerungseinrichtung in Abhängigkeit von der Stellung oder Bewegung der Schließeinrichtung bzw. des Deckels oder unabhängig davon gesteuert. Die Antriebseinrichtung kann somit den Windabweiser kontinuierlich mit der Bewegung des Deckels verschieben oder sie gestattet eine zeit- oder wegversetzte Verschiebung oder eine gänzlich unabhängige Verschiebung.

Die Aufgabe wird schließlich auch durch ein Fahrzeugdach mit einer Windabweiseranordnung mit einem oder mehreren der oben genannten Merkmale gelöst.

Nachfolgend wird ein Ausführungsbeispiel der Windabweiseranordnung unter Bezugnahme auf die Zeichnung näher erläutert. Es zeigt:
- Fig. 1: in einer perspektivischen Ansicht einen Personenkraftwagen mit zwei in einer Dachöffnung des Fahrzeugdaches bewegbar angeordneten Deckeln und einem Windabweiser in Wirkstellung am Hinterrand des hinteren geöffneten Deckels;
- Fig. 2: in einer Längsschnittansicht in schematischer Darstellung das Fahrzeugdach mit geschlossenen Deckeln und dem Windabweiser in versenkter Ruhestellung;
- Fig. 3: in einer Längsschnittansicht in schematischer Darstellung das Fahrzeugdach, wobei der hintere Deckel in eine Teilöffnungsstellung nach vorne verschoben ist und der Windabweiser in Wirkstellung ausgestellt ist; und
- Fig. 4: in einer Längsschnittansicht in schematischer Darstellung das Fahrzeugdach, wobei der hintere Deckel in seine volle Öffnungsstellung nach vorne verschoben ist und der in Wirkstellung ausgestellte Windabweiser dem Deckelhinterrand gefolgt ist.

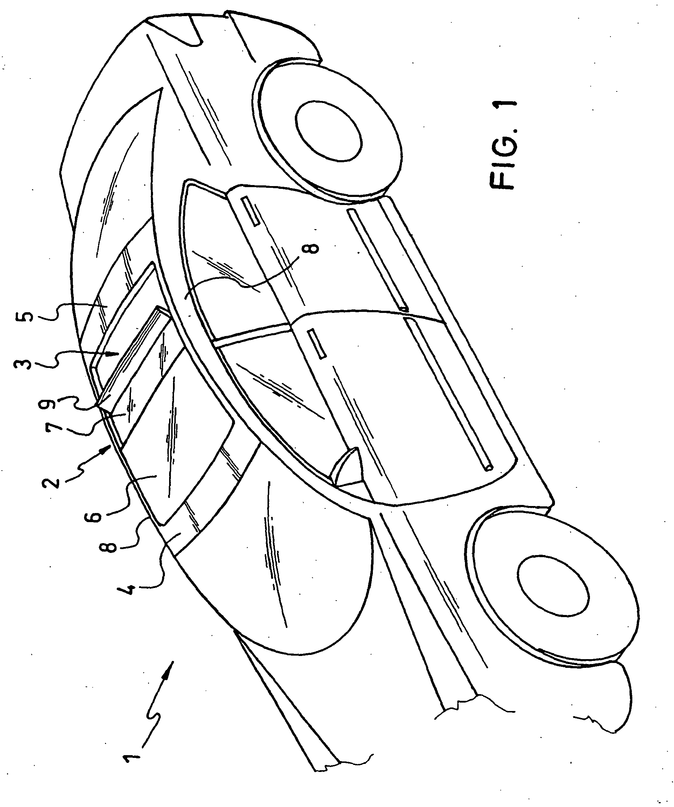

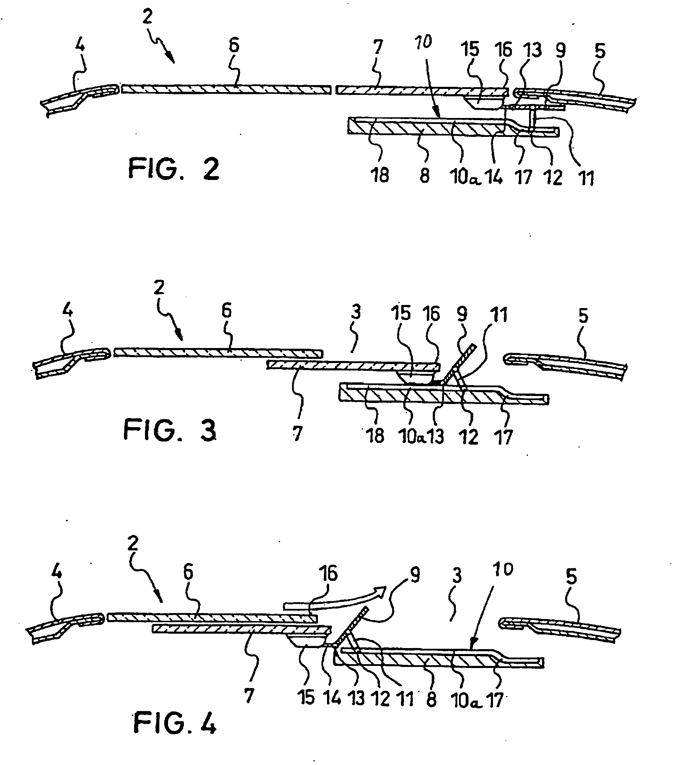

Ein Personenkraftwagen 1 (siehe Fig. 1) enthält ein Fahrzeugdach 2 mit einer Dachöffnung 3, die sich zwischen einem vorderen festen Dachabschnitt 4 und einem hinteren festen Dachabschnitt 5 erstreckt und mittels einer Schließeinrichtung wahlweise zu verschließen oder zumindest teilweise zu öffnen ist. Die Schließeinrichtung enthält im dargestellten Ausführungsbeispiel einen vorderen Deckel 6 und einen hinteren Deckel 7, die insbesondere Glasdeckel sind, in Schließstellung (Fig. 2) in der Dachöffnung 3 hintereinander angeordnet sind und von denen zumindest der hintere Deckel 7 an Führungen (nicht dargestellt) an seitlichen Dachholmen 8 in bekannter Weise verschiebbar geführt ist und aus seiner Schließstellung in Fahrtrichtung nach vorne unter den vorderen Deckel 6 verschiebbar ist (Fig. 3 und 4). Der vordere Deckel 6 kann in der Dachöffnung 3 bzw. in dem für die Deckel 6, 7 gebildeten Dachausschnitt fest angebracht sein oder er ist ausstellbar und/oder verschiebbar gelagert.

Eine Windabweiseranordnung für das Fahrzeugdach 2 enthält einen lamellenförmigen Windabweiser 9, der annähernd die Breite der Dachöffnung 3 aufweist und beidseits an einer jeweiligen Führungskulisse 10a einer Führung 10 verschiebbar geführt ist, die an dem zugeordneten seitlichen Dachholm 8 unterhalb der Oberfläche der festen Dachabschnitte 4 und 5 bzw. des Niveaus der geschlossenen Deckel 6, 7 angeordnet ist (die Beschreibung der Windabweiseranordnung erfolgt anhand der bezüglich des Fahrzeugdaches linksseitigen Bauteile, die an der gegenüberliegenden rechten Seite in entsprechender Weise gebildet sind). Der Windabweiser 9 enthält beidseits jeweils einen Lagerarm 11, der vom Windabweiser 9 nach unten absteht und in der Führungskulisse 10a mittels eines Lagerteils 12, z. B. ein Lagerzapfen oder ein Gleitschuh, an dem der Lagerarm 11 schwenkbar befestigt ist, verschiebbar und verschwenkbar aufgenommen ist.

Der Windabweiser 9 ist um eine Schwenkachse 13 im Bereich seines Vorderrandes mit einer Koppelstange 14 schwenkbar verbunden, die an einem Verstärkungsrahmen 15 befestigt ist, der an der Unterseite des hinteren Deckels 7 benachbart zum Hinterrand 16 des hinteren Deckels 7 angebracht ist.

Wenn der hintere Deckel 7 in seiner Schließstellung die Dachöffnung 3 verschließt (Fig. 2), ist der Windabweiser 9 in annähernd horizontaler Ausrichtung unter dem hinteren festen Dachabschnitt 5 angeordnet. Dabei befindet sich das Lagerteil 12 des Lagerarms 11 in einem Hinterabschnitt 17 der Führungskulisse 10a, der gegenüber dem Vorderabschnitt 18 der Führungskulisse 10a einen abgesenkten Bahnverlauf aufweist.

Zum Freigeben der Dachöffnung 3 wird der hintere Deckel 7, z. B. mittels einer üblichen Antriebseinrichtung mit seitlichen Antriebskabeln (nicht dargestellt), in Fahrtrichtung nach vorne unter den vorderen Deckel 6 verschoben. Dabei nimmt der Deckel 6 über die Koppelstange 14 den Windabweiser 9 mit und zieht ihn zunächst von unterhalb des festen hinteren Dachabschnitts 5 nach vorne in den Bereich der Dachöffnung 3 hinaus. Beim weiteren Vorwärtsverschieben wird das Lagerteil 12 des Windabweisers 9 im ansteigenden Hinterabschnitt 17 der Führungskulisse 10a angehoben, so daß der Windabweiser 9 um die Schwenkachse 13 in seine Wirkstellung ausgeschwenkt wird (Fig. 3). Entsprechend der Position der Schwenkachse 13, die von der Koppelstange 14 bestimmt wird, im Verhältnis zur Position des Lagerteils 12 in der Führungskulisse 10a wird die Schwenkstellung des Windabweisers 9 eingestellt.

In der vorderen Stellung des hinteren Deckels 7 (siehe Fig. 4) ist der dem hinteren Deckel 7 zugeordnete Abschnitt der Dachöffnung 3 vollständig geöffnet und der Windabweiser 9, der durch seine Koppelung an den Hinterrand 16 des hinteren Deckels 7 diesem bei seiner Öffnungs- und Schließbewegung folgt, in seiner Wirkstellung vor der Dachöffnung 3. Beim Schließen des hinteren Deckels 7 wird in umgekehrtem Bewegungsablauf der Windabweiser 9 wieder abgesenkt und unter den hinteren festen Dachabschnitt 5 eingeschoben, unter dem er von oben nicht sichtbar angeordnet ist. Auf diese Weise bleibt auch der Hinterbereich des hinteren Deckels 7 frei von einem in Ruhestellung angeordneten Windabweiser im Gegensatz zu der Windabweiseranordnung, wie sie aus der eingangs genannten DE 41 15 627 C1 bekannt ist. Wenn der hintere Deckel 7 ein Glasdeckel ist, bleibt dementsprechend der Durchsichtbereich des Glasdeckels vollständig erhalten.

In einer alternativen Gestaltung ist die Schwenkachse 13 des Windabweisers 9 ebenfalls an der Führungskulisse 10 oder an einer zusätzlichen Führungskulisse geführt. Gemäß der Festlegung des Verlaufs der zumindest einen Führungskulisse 10a ist das Bewegungsverhalten des Windabweisers 9 einstellbar. Wenn der Windabweiser 9 ausschließlich an der oder den Führungskulissen 10a gelagert und geführt ist, kann er ohne direkte mechanische Koppelung mit dem hinteren Deckel 7 durch eine eigene Antriebseinrichtung entlang der Führungskulisse 10a bzw. der Führungskulissen bewegt werden. Die Antriebseinrichtung wird in Abhängigkeit der Stellung bzw. der Bewegung des hinteren Deckels 7 gesteuert, so daß der Windabweiser 9 ebenfalls im Bereich des Hinterrandes 16 des hinteren Deckels 7 angeordnet ist.

### Bezugszeichenliste

- 1: Personenkraftwagen
- 2: Fahrzeugdach
- 3: Dachöffnung
- 4: vorderer Dachabschnitt
- 5: hinterer Dachabschnitt
- 6: Deckel
- 7: Deckel
- 8: Dachholm
- 9: Windabweiser
- 10: Führung
- 10a: Führungskulisse
- 11: Lagerarm
- 12: Lagerteils
- 13: Schwenkachse
- 14: Koppelstange
- 15: Verstärkungsrahmen
- 16: Hinterrand
- 17: Hinterabschnitt
- 18: Vorderabschnitt

## Patentansprüche

1. Windabweiseranordnung für ein Fahrzeugdach (2) mit einer Dachöffnung (3), die durch eine bewegbare Schließeinrichtung (7) wahlweise verschließbar und durch Verschieben der Schließeinrichtung (7) in Fahrtrichtung zumindest teilweise freilegbar ist,
wobei ein in Querrichtung des Fahrzeugdaches (2) verlaufender Windabweiser (9) bei geöffneter Schließeinrichtung (7) am Hinterrand (16) der Schließeinrichtung (7) in Wirkstellung angeordnet ist und in seiner Ruhestellung unter einem an die Dachöffnung (3) rückseitig angrenzenden Dachteil (5) des Fahrzeugdaches (2) angeordnet ist,
**dadurch gekennzeichnet,**
**daß** der Windabweiser (9) beidseits am Fahrzeugdach (2) an Führungen (10) gelagert und von einem Antrieb bewegbar ist, daß er dem Hinterrand (16) der sich in Fahrtrichtung öffnenden Schließeinrichtung (7) folgt, wobei der Verlauf jeder Führung (10) das Bewegungsverhalten des Windabweisers (9) steuert.

2. Windabweiseranordnung nach Anspruch 1,
**dadurch gekennzeichnet, daß** der Windabweiser (9) mit der Schließeinrichtung (7) gekoppelt ist und von dieser bewegt ist oder daß er einen eigenen Antrieb aufweist.

3. Windabweiseranordnung nach Anspruch 1 oder 2,
**dadurch gekennzeichnet, daß** der Windabweiser (9) beidseits jeweils eine Lagereinrichtung (11, 12) aufweist, die den Windabweiser (9) an der jeweiligen Führung (10) am Fahrzeugdach (2) verschiebbar und verschwenkbar lagert.

4. Windabweiseranordnung nach Anspruch 3,
**dadurch gekennzeichnet, daß** die Lagereinrichtung einen Lagerarm (11) aufweist, der an der Führung (10) mittels eines Gleit-Schwenkteils (12) gelagert ist.

5. Windabweiseranordnung nach einem der Ansprüche 1 bis 4,
**dadurch gekennzeichnet, daß** die Führung eine Führungskulisse (10a) mit einem das Bewegungsverhalten des Windabweisers (9) steuernden Verlauf aufweist.

6. Windabweiseranordnung nach einem der Ansprüche 1 bis 5,
**dadurch gekennzeichnet, daß** die Führung eine Führungskulisse (10a) mit einem abgesenkten Hinterabschnitt (17) aufweist.

7. Windabweiseranordnung nach einem der Ansprüche 1 bis 6,
**dadurch gekennzeichnet, daß** eine Koppelstange (14) den Windabweiser (9) mit der Schließeinrichtung (7) verbindet.

8. Windabweiseranordnung nach einem der Ansprüche 1 bis 7,
**dadurch gekennzeichnet, daß** die Schließeinrichtung von einem Deckel (7) eines Schiebedaches, von einem Lamellendach oder von einem Faltdach gebildet ist.

9. Windabweiseranordnung nach einem der Ansprüche 1 bis 8,
**dadurch gekennzeichnet, daß** die Schließeinrichtung von zwei in Fahrtrichtung hintereinander angeordneten Deckeln (6, 7) gebildet ist.

10. Windabweiseranordnung nach Anspruch 8 oder 9,
**dadurch gekennzeichnet, daß** der bzw. die Deckel (6, 7) aus transparentem Material hergestellt und insbesondere Glasdeckel sind.

11. Windabweiseranordnung nach einem der Ansprüche 2 bis 10,
**dadurch gekennzeichnet, daß** der Antrieb des Windabweisers (9) von einer Steuerungseinrichtung in Abhängigkeit von der Stellung oder Bewegung der Schließeinrichtung oder unabhängig davon gesteuert wird.

12. Fahrzeugdach mit einer Windabweiseranordnung nach einem der Ansprüche 1 bis 11.

## Claims

1. Wind deflector arrangement for a vehicle roof (2) having a roof opening (3) which can be selectively closed by a movable closing device (7) and opened at least partly in the direction of travel by displacing the closing device (7), wherein, when the closing device (7) is opened, a wind deflector (9) running in the transverse direction of the vehicle roof (2) is arranged in an operative position at the rear edge (16) of the closing device (7) and, in its rest position, is arranged under a roof part (5) of the vehicle roof (2) that adjoins the rear of the roof opening (3),
**characterized in that** the wind deflector (9) is mounted on both sides on guides (10) on the vehicle roof (2) and is moveable along these guides such that it follows the rear edge (16) of the closing device (7) opening in the direction of travel, the course of each guide (10) controlling the movement behaviour of the wind deflector (9).

2. Wind deflector arrangement according to Claim 1,
**characterized in that** the wind deflector (9) is coupled to the closing device (7) and is moved by the latter, or **in that** it has its own drive.

3. Wind deflector arrangement according to Claim 1 or 2,
**characterized in that** the wind deflector (9) has on both sides a bearing device (11, 12) respectively, which mounts the wind defector (9) on the respective guide (10) on the vehicle roof (2) such that it can be displaced and pivoted.

4. Wind deflector arrangement according to Claim 3,
**characterized in that** the bearing device has a bearing arm (11), which is mounted on the guide (10) by means of a sliding swivelling part (12).

5. Wind deflector arrangement according to one of Claims 1 to 4, **characterized in that** the guide has a guide slot (10a) with a course controlling the movement behaviour of the wind deflector (9).

6. Wind deflector arrangement according to one of Claims 1 to 5, **characterized in that** the guide has a guide slot (10a) with a lowered rear section (17).

7. Wind deflector arrangement according to one of Claims 1 to 6, **characterized in that** a coupling rod (14) connects the wind deflector (9) to the closing device (7).

8. Wind deflector arrangement according to one of Claims 1 to 7, **characterized in that** the closing device is formed by a panel (7) of a sliding roof, by a louvred roof or by a folding roof.

9. Wind deflector arrangement according to one of Claims 1 to 8, **characterized in that** the closing device is formed by two panels (6, 7) arranged one after the other in the direction of travel.

10. Wind deflector arrangement according to Claim 8 or 9,
**characterized in that** the panel or the panels (6, 7) are produced from transparent material and, in particular, are glass panels.

11. Wind deflector arrangement according to one of Claims 2 to 10, **characterized in that** the drive of the wind deflector (9) is controlled by a control device as a function of the position or movement of the closing device or independently thereof.

12. Vehicle roof having a wind deflector arrangement according to one of Claims 1 to 11.

## Revendications

1. Installation de déflecteur de vent pour un toit de véhicule (2) doté d'une ouverture de toit (3) qui peut être au choix fermée par un dispositif de fermeture mobile (7) et au moins partiellement dégagée en déplaçant le dispositif de fermeture (7) dans le sens de la marche,
un déflecteur de vent (9) s'étendant dans le sens transversal du toit de véhicule (2) étant installé en position d'action, lorsque le dispositif de fermeture (7) est ouvert, sur le bord arrière (16) du dispositif de fermeture (7) et étant installé, dans sa position de repos, sous une partie de toit (5) du toit de véhicule (2) adjacente au niveau de l'arrière à l'ouverture de toit (3),
**caractérisée en ce que**,
le déflecteur de vent (9) est supporté par des glissières (10) de part et d'autre du toit de véhicule (2) et est déplaçable par un entraînement, de façon à ce qu'il suive le bord arrière (16) du dispositif de fermeture (7) s'ouvrant dans le sens de la marche, le tracé de chaque glissière (10) dirigeant le comportement de déplacement du déflecteur de vent (9).

2. Installation de déflecteur de vent selon la revendication 1, **caractérisée en ce que** le déflecteur de vent (9) est couplé au dispositif de fermeture (7) et est déplacé par celui-ci, ou **en ce qu'**il comporte un entraînement propre.

3. Installation de déflecteur de vent selon la revendication 1 ou 2, **caractérisée en ce que** le déflecteur de vent (9) comporte respectivement de part et d'autre un dispositif support (11, 12) qui supporte le déflecteur de vent (9) de manière déplaçable et orientable sur la glissière respective (10) sur le toit de véhicule (2).

4. Installation de déflecteur de vent selon la revendication 3, **caractérisée en ce que** le dispositif support comporte un bras d'appui (11) qui est supporté par la glissière (10) au moyen d'une partie orientable et coulissante (12).

5. Installation de déflecteur de vent selon l'une des revendications 1 à 4, **caractérisée en ce que** la glissière comporte une coulisse de guidage (10a) avec un tracé dirigeant le comportement de déplacement du déflecteur de vent (9).

6. Installation de déflecteur de vent selon l'une des revendications 1 à 5, **caractérisée en ce que** la glissière comporte une coulisse de guidage (10a) avec une partie arrière (17) abaissée.

7. Installation de déflecteur de vent selon l'une des revendications 1 à 6, **caractérisée en ce qu'**une tige de couplage (14) relie le déflecteur de vent (9) au dispositif de fermeture (7).

8. Installation de déflecteur de vent selon l'une des revendications 1 à 7, **caractérisée en ce que** le dispositif de fermeture est formé d'un couvercle (7) d'un toit coulissant, d'un toit lamellaire ou d'un toit pliant.

9. Installation de déflecteur de vent selon l'une des revendications 1 à 8, **caractérisée en ce que** le dispositif de fermeture est formé de deux couvercles (6, 7) installés l'un derrière l'autre dans le sens de la marche.

10. Installation de déflecteur de vent selon la revendication 8 ou 9, **caractérisée en ce que** le ou, selon le cas, les couvercle(s) (6, 7), est/sont réalisé(s) à partir d'un matériau transparent et en particulier d'un couvercle en verre.

11. Installation de déflecteur de vent selon l'une des revendications 2 à 10, **caractérisée en ce que** l'entraînement du déflecteur de vent (9) est dirigé par un dispositif de commande en fonction de la position ou du déplacement du dispositif de fermeture ou indépendamment de celui-ci.

12. Toit de véhicule doté d'une installation de déflecteur de vent selon l'une des revendications 1 à 11.
